# EUROPEAN PATENT APPLICATION

(11) **EP 4 403 291 A1**
(43) Date of publication of application: **24.07.2024**
(21) Application number: 24150543.7
(22) Date of filing: 05.01.2024
(51) Int. Cl.: B23K 20/10, B23K 31/00, B23K 37/04, H01M 50/516, H01R 43/02, B23K 101/38, B23K 103/10

(54) **ULTRASONIC WELDING DEVICE**

(30) Priority: 16.01.2023 KR 20230006356
(71) Applicant: Samsung SDI Co., Ltd., Yongin-si, Gyeonggi-do 17084 (KR)
(72) Inventor: KIM, Jungsoo, 17084 Yongin-si (KR); YEOM, Gilchoun, 17084 Yongin-si (KR); PARK, Myunghyun, 17084 Yongin-si (KR); LEE, Youngjin, 17084 Yongin-si (KR); NAM, Jinwon, 17084 Yongin-si (KR)
(74) Representative: Marks & Clerk LLP

(57) **Abstract**

An ultrasonic welding device is provided. The ultrasonic welding device includes: an anvil for supporting a flexible first member on a lower side from among the first member and a flexible second member overlapping in a top to bottom direction and sequentially disposed from bottom to top; a horn for ultrasonically welding the first member and the second member by elevation and ultrasonic vibration at an upper portion of the second member; and a guide jig including an opening corresponding to a welding portion of the flexible first member and the flexible second member for guiding elevation and ultrasonic vibration of the horn, and covering an external plane around the welding portion with a plane corresponding portion so as to ultrasonically weld the first member and the second member.

## Description

### BACKGROUND OF THE DISCLOSURE

### (a) Field of the Disclosure

The present disclosure relates to an ultrasonic welding device. More particularly, the present disclosure relates to an ultrasonic welding device for ultrasonically welding flexible members.

### (b) Description of the Related Art

An ultrasonic welding is a solid-state welding in which welding is performed at a low temperature compared with arc welding or laser welding in a short time. It is an environmentally-friendly welding that may connect only a specific part. Therefore, the ultrasonic welding is widely used in welding of battery, electronic industry and its parts.

However, during the ultrasonic welding, a welding material is not completely delaminated after welding, and some materials are attached to a horn, that is, loss occurs in terms of balance of welding quality and production volume due to the seizure phenomenon.

To improve this, a horn design is optimized according to a structure and thickness of the welding material. However, if welding busbars of a ductile material to each other, the appearance and the structure become non-uniform because of excessive deformation of the ductile material. By this, cracks are generated in the flexible material, leading to a product failure.

As an example, a secondary battery module may be formed by connecting cylindrical secondary battery cells in series/parallel. In order to supplement characteristics of the stiffness and vibration of the electrical connection and the structure of the cells, an upper flexible busbar member (also referred to as an upper member) and a lower flexible busbar member (also referred to as a lower member) are connected to each other by ultrasonic welding.

At this time, a guide jig is used to designate and hold a position of the upper member from among the upper and lower members, and ultrasonic welding is performed thereto. In this case, lifting may be generated around the welding portion, and as a result, quality defects may occur because of interface cracks and thickness imbalance between the upper member and the lower member.

### SUMMARY OF THE DISCLOSURE

The present disclosure has been made in an effort to provide an ultrasonic welding device for controlling deformation of flexible materials during welding, and increasing rigidity and reliability of a welding portion.

The present disclosure has been made in another effort to provide an ultrasonic welding device for, if welding flexible busbar members made of aluminium, preventing members from lifting around a welding portion, preventing interface cracks and thickness imbalance between two members, and thereby increasing welding quality.

An embodiment of the present disclosure provides an ultrasonic welding device including an anvil for supporting a flexible first member from among the first member and a flexible second member overlapping in a top to bottom direction and sequentially disposed from bottom to top; a horn for ultrasonically welding the first member and the second member by elevation and ultrasonic vibration at an upper portion of the second member; and a guide jig including an opening corresponding to a welding portion of the first member and the second member for guiding elevation and ultrasonic vibration of the horn, and covering an external plane around the welding portion with a plane corresponding portion so as to ultrasonically weld the first member and the second member.

The plane corresponding portion may be formed as a same plane in four directions from among two sides of a length direction and two sides of a width direction of the first member and the second member on the external plane around the welding portion.

The guide jig may further hold an external lateral side of the welding portion with a lateral corresponding portion.

The lateral corresponding portion may protrude downward from the plane corresponding portion in three directions of one side of a length direction and two sides of a width direction from among the two sides of the length direction and the two sides of the width direction of the first member and the second member on the external plane around the welding portion.

The guide jig may include a guide portion including the opening and the plane corresponding portion, and an installer connected to one side of the guide portion and installed in a base.

The guide portion may have the opening in a center and an external portion outside the opening, and with respect to a length direction and a width direction of the first member and the second member, a first width of the opening in a width direction may be greater than a second width of the external portion in the width direction.

A first length of the opening in the length direction may be greater than a second length of the external portion in the length direction on one side of the length direction.

The second length may be greater than the second width.

The first member may include a first busbar including branches connected to battery cells provided in a secondary battery module, and a second busbar spaced by a gap from the first busbar in a length direction and including branches connected to other battery cells, and the second member may connect the first busbar and the second busbar by ultrasonic welding.

The first busbar may further include a first connector on one side of a width direction, the second busbar may further include a second connector on one side of the width direction, and the second member may be connected to the first connector and the second connector by ultrasonic welding.

The first member and the second member may be made of aluminium.

The first member and the second member may be made of an aluminium material, and the horn may be made of a tungsten carbide material with strength and stiffness that are greater than those of the first member and the second member.

The first member and the second member may be made of an aluminium material, and the guide jig may be made of a tungsten carbide material with strength and stiffness that are greater than those of the first member and the second member.

At least some of the above and other features of the invention are set out in the claims.

According to the embodiment, the guide jig having an opening and a plane corresponding portion is applied to cover the plane external plane around the welding portion of the first and second members with the plane corresponding portion, and the elevation and ultrasonic vibration of the horn are guided through the opening, so that the ultrasonic welding may be performed.

According to the embodiment, if the first and second members are made of a flexible material, the deformation generated by the ultrasonic welding may be controlled. By this, increased strength and reliability of the welding portion may be obtained.

According to the embodiment, the aluminium busbar members are covered by using the guide jig and are ultrasonically welded, thereby preventing the members from lifting around the welding portion.

Therefore, the interface cracks and the thickness imbalance are prevented between the two members, and welding quality of the welding portion may be improved.

### BRIEF DESCRIPTION OF THE DRAWINGS

FIG. 1 shows a perspective view of applying flexible busbar members to an ultrasonic welding device according to an embodiment to weld the same.
FIG. 2 shows a perspective view of disassembled flexible busbar members, a horn, a guide jig, and an anvil of FIG. 1.
FIG. 3 shows a perspective view of a connector of flexible busbar members applied to FIG. 1 and FIG. 2.
FIG. 4A and FIG. 4B show perspective views of a guide jig seen from top and bottom.
FIG. 5 shows a top plan view in which a guide jig is disposed on flexible busbar members to be welded.
FIG. 6 shows a cross-sectional view with respect to a line VI-VI of FIG. 5.
FIG. 7 shows a cross-sectional view with respect to a line VII-VII of FIG. 5.
FIG. 8 shows an image if flexible busbar members are welded by using an ultrasonic welding device according to a comparative example 1.
FIG. 9 shows an image if flexible busbar members are welded by using an ultrasonic welding device according to a comparative example 2.
FIG. 10 shows an image in a plan view if flexible busbar members are welded by using an ultrasonic welding device according to an embodiment.
FIG. 11 shows an image in a lateral view if flexible busbar members are welded by using an ultrasonic welding device according to an embodiment.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

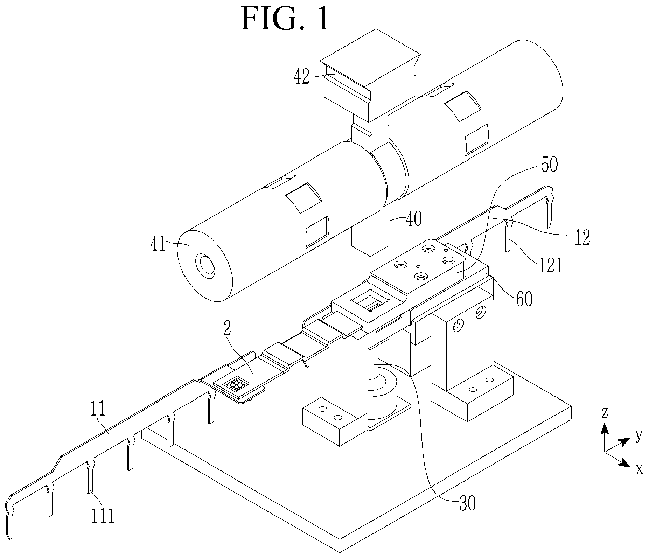

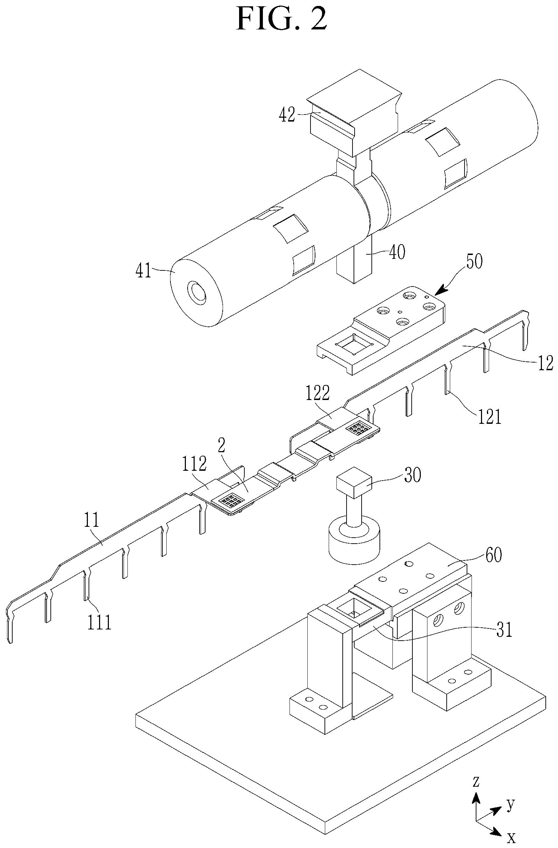

FIG. 1 shows a perspective view of applying flexible busbar members to an ultrasonic welding device according to an embodiment to weld the same, and FIG. 2 shows a perspective view of disassembled flexible busbar members, a horn, a guide jig, and an anvil of FIG. 1.

Referring to FIG. 1 and FIG. 2, the ultrasonic welding device includes an anvil 30, a horn 40, and a guide jig 50 to perform ultrasonic welding to a first member 1 and a second member 2 that are flexible, overlap in a top-down direction (z-axis direction), and are sequentially disposed from bottom to top.

For example, the first member 1 may include a first busbar 11 and a second busbar 12, and the second member 2 may be connected to the first busbar 11 and the second busbar 12 at respective ends by ultrasonic welding. Therefore, the first busbar 11 may be connected to the second busbar 12 in a length direction (y-axis direction) by the second member 2.

The first busbar 11 may have branches 111 connected to battery cells provided in a secondary battery module (not shown). The second busbar 12 may be spaced from the first busbar 11 by a gap G in the length direction (y-axis direction) and have branches 121 connected to other battery cells.

The battery cells may be formed with a cylindrical secondary battery. The first and second busbars 11 and 12 that is the first member 1, and the second member 2 may connect the battery cells in series/parallel to form a secondary battery module.

Therefore, the first and second members 1 and 2 may be made of a flexible material and are connected by ultrasonic welding so as to supplement electrical connection, structural rigidity, and structural vibration. For example, the first and second members 1 and 2 may be made of aluminium.

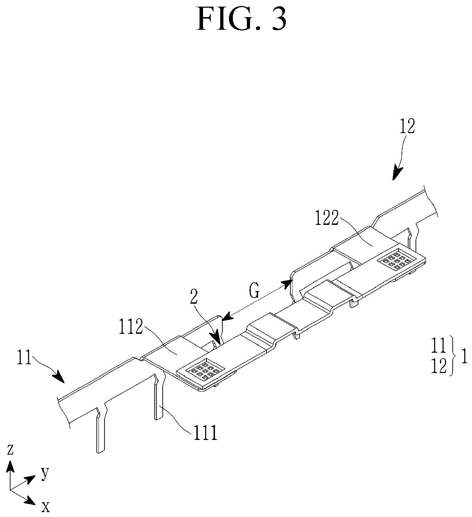

FIG. 3 shows a perspective view of a connector of flexible busbar members applied to FIG. 1 and FIG. 2. Referring to FIG. 1 to FIG. 3, the first busbar 11 may further include a first connector 112 on one side of the width direction (x-axis direction). The second busbar 12 may be spaced from the first busbar 11 by the gap G and further includes second connector 122 on one side of the width direction (x-axis direction).

The second member 2 may be connected to the first connector 112 and the second connector 122 at respective ends by ultrasonic welding. Therefore, the first busbar 11 and the second busbar 12 may be connected in the length direction (y-axis direction) by the second member 2, may be disposed in the secondary battery module, and may be electrically and mechanically connected to the battery cell.

Referring to FIG. 1 and FIG. 2, the anvil 30 may support first and second members 1 and 2 overlapping in the top to bottom direction (z-axis direction) and sequentially disposed from bottom to top so as to fluently transmit an amplitude of ultrasonic energy to the first and second members 1 and 2 to be welded. The anvil 30 may support the first busbar 11 or the second busbar 12 that is the first member 1 on a lower side.

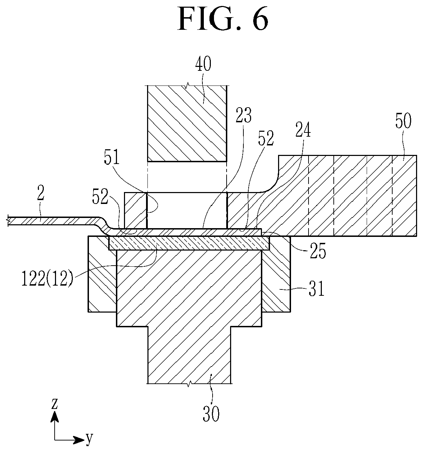

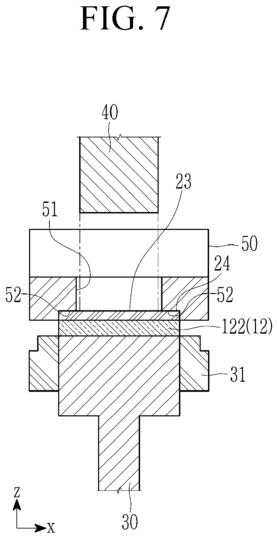

Substantially, the anvil 30 may support the ultrasonic wave amplitude of the horn 30 during ultrasonic welding, may receive a pressure, and may further include an external support portion 31 outside the anvil 30. The external support portion 31 may support a state in which the first busbar 11 or the second busbar 12 that is the first member 1 on the lower side is disposed, and does not receive the pressure with the ultrasonic wave amplitude (refer to FIG. 6 and FIG. 7).

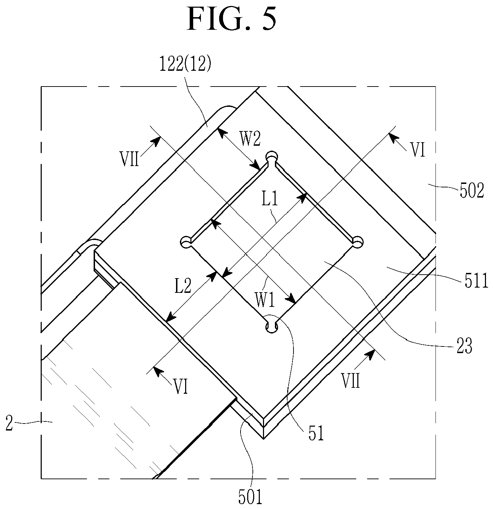

The horn 40 ultrasonically welds the first member 1 and the second member 2 by elevation and ultrasonic vibration at an upper portion of the second member 2. That is, the horn 40 may apply the ultrasonic energy provided by the converter 41 and the booster 42 to the first and second member 1 and 2 to be welded, thereby forming a welding portion 23 (refer to FIG. 5). When the first and second members 1 and 2 being welded, the first and second members 1 and 2 are supported by the anvil 30.

For example, the converter 41 may convert electrical energy into mechanical energy to generate the amplitude of ultrasonic energy. The booster 42 may receive the amplitude of ultrasonic energy from the converter 41, may increase/reduce the amplitude with a predetermined ratio, and may transmit a resultant amplitude to the horn 40.

The guide jig 50 may be used in ultrasonically welding the first and second members 1 and 2 made of a flexible material such as aluminium. The first member 1 may include a first busbar 11 and a second busbar 12 made of aluminium.

The guide jig 50 may control deformation generated if ultrasonically welding the first and second members 1 and 2, thereby increasing welding strength and welding reliability on the welding portion 23. The guide jig 50 may fix a position of the second member 2 on an upper side, and may surround a peripheral portion of the horn 40 to control lifting and deformation around the welding portion 23.

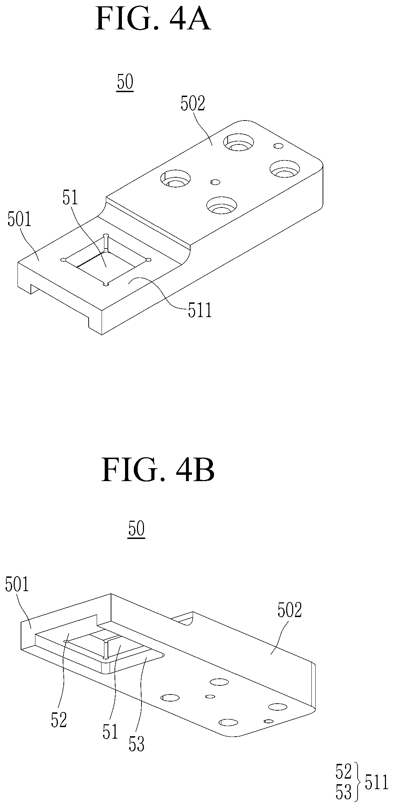

FIG. 4A and FIG. 4B show perspective views of a guide jig seen from top and bottom. Referring to FIG. 1, FIG. 2, FIG. 4A, and FIG. 4B, the guide jig 50 includes an opening 51 and a plane corresponding portion 52. The guide jig 50 may further include a lateral corresponding portion 53.

FIG. 5 shows a top plan view in which a guide jig is disposed on flexible busbar members to be welded. Referring to FIG. 4A, FIG. 4B, and FIG. 5, if viewed in the xy plane, the opening 51 forms a quadrangular closed space, enabling the horn 40 to ascend and descend and the amplitude operation of ultrasonic energy through the opening 51.

The opening 51 is formed to penetrate the guide jig 50 corresponding to the welding portion 23 of the first and second members 1 and 2 for ultrasonically welding the first and second members 1 and 2, guide the elevation and ultrasonic vibration of the horn 40, and open the welding portion 23.

FIG. 6 shows a cross-sectional view with respect to a line VI-VI of FIG. 5, and FIG. 7 shows a cross-sectional view with respect to a line VII-VII of FIG. 5. Referring to FIG. 4A, FIG. 4B, and FIG. 5 to FIG. 7, in this instance, the plane corresponding portion 52 formed on an external side of the opening 51 may allow formation of the welding portion 23 at a portion that corresponds to the opening 51, and may cover an external plane 24 around the welding portion 23 that is an upper side of the second member 2 and fix the same.

Therefore, if the horn 40 vibrates with ultrasonic energy to form the welding portion 23, the plane corresponding portion 52 may control deformation of the external plane 24 around the welding portion 23. For this purpose, the plane corresponding portion 52 may be formed as the same plane in four directions from among two sides of the length direction (y-axis direction) and two sides of the width direction (x-axis direction) of the first member 1 and the second member 2 on the external plane 24 around the welding portion 23.

The guide jig 50 may further hold an external lateral side 25 of the welding portion 23 with the lateral corresponding portion 53. The lateral corresponding portion 53 may protrude downward from the plane corresponding portion 52 in the three directions of one side of the length direction (y-axis direction) and the two sides of the width direction (x-axis direction) from among the two sides of the length direction (y-axis direction) and the two sides of the width direction (x-axis direction) of the first member 1 and the second member 2 on the external plane 24 around the welding portion 23. The lateral corresponding portion 53 may have a height difference from the plane corresponding portion 52.

The guide jig 50 may include a guide portion 501 and an installer 502. The guide portion 501 may include the opening 51 and the plane corresponding portion 52, and may further include the lateral corresponding portion 53. Referring to FIG. 1 and FIG. 2, the installer 502 may be connected to one side of the guide portion 501 and may be installed in a base 60 of the ultrasonic welding device.

Referring to FIG. 5, the guide portion 501 has the opening 51 in the center and includes an external portion 511 outside the opening 51, and a first width W1 of the opening 51 in the width direction (x-axis direction) may be greater than a second width W2 of the external portion 511 in the width direction (x-axis direction) with respect to the length direction (y-axis direction) and the width direction (x-axis direction) of the first member 1 and the second member 2.

A first length L1 of the opening 51 in the length direction (y-axis direction) may be greater than a second length L2 of the external portion 511 in the length direction (y-axis direction) on one side of the length direction (y-axis direction). The second length L2 may be greater than the second width W2. The second length L2 of the external portion 511 may prevent the second member 2 from lifting at the respective ends of the welding portion 23 in the length direction (y-axis direction), and for this purpose, the second length L2 may be sufficiently great.

The second width W2 may prevent the second member 2 from lifting at the respective ends of the welding portion 23 in the width direction (x-axis direction), and for this purpose, it may have a sufficient length. That is, the second length L2 and the second width W2 of the external portion 511 may suppress deformation of the second member 2 disposed on the upper side around the welding portion 23 of the first and second members 1 and 2.

The external portion 511 may be formed with the plane corresponding portion 52 around the opening 51, and as shown, it may further include a lateral corresponding portion 53 connected to the plane corresponding portion 52. The external portion 511 further including a lateral corresponding portion 53 may more firmly fix the upper side and the lateral side of the second member 2 around the welding portion 23 so it may further suppress deformation around the welding portion 23.

FIG. 6 and FIG. 7 show that the guide jig 50 contacts the upper side and the lateral side of the second member 2. However, a gap spaced between the guide jig 50 and the second member 2 may be set according to power, pressure, and time of ultrasonic wave applied energy. For example, the gap may be set by reflecting an optimized exterior and an allowable deformation level on the level of 1 mm.

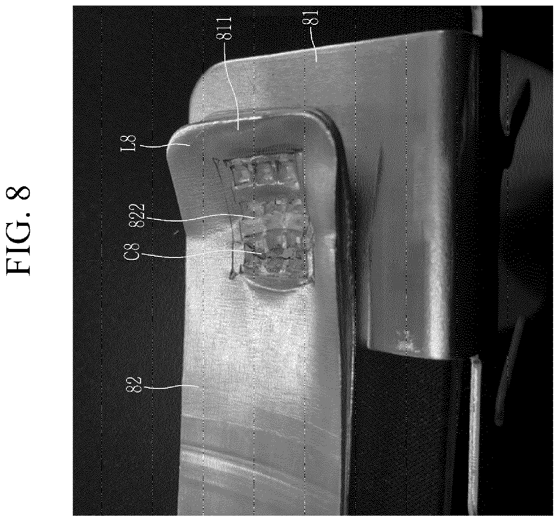

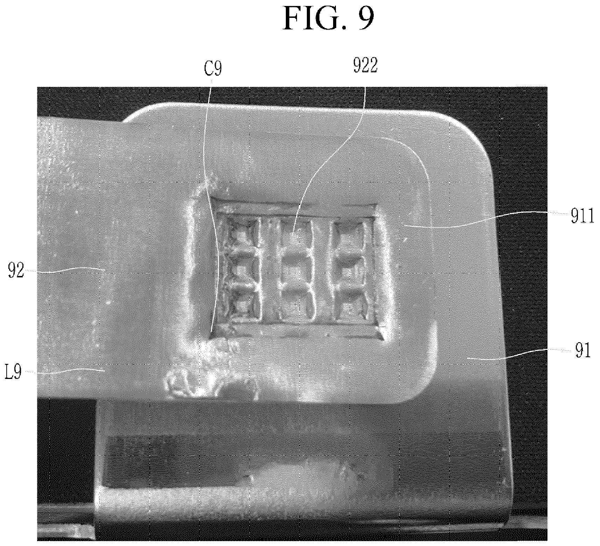

FIG. 8 shows an image if flexible busbar members are welded by using an ultrasonic welding device according to a comparative example 1, and FIG. 9 shows an image if flexible busbar members are welded by using an ultrasonic welding device according to a comparative example 2.

Referring to FIG. 5, the guide jig 50 may completely surround the opening 51 with the external portion 511, and according to comparative examples 1 and 2, a guide jig (not shown) may open one side of the opening to hold a member to be welded.

According to the comparative examples 1 and 2, as the first members 81 and 91 and the second members 82 and 92 are ultrasonically welded by using the guide jig as shown in FIG. 8 and FIG. 9, the external portions 811 and 911 around the welding portions 822 and 922 are greatly deformed to generate lifting L8 and L9 and cracks C8 and C9.

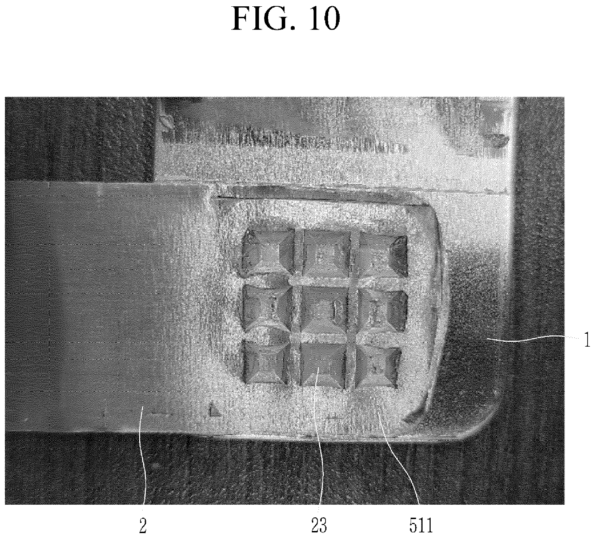

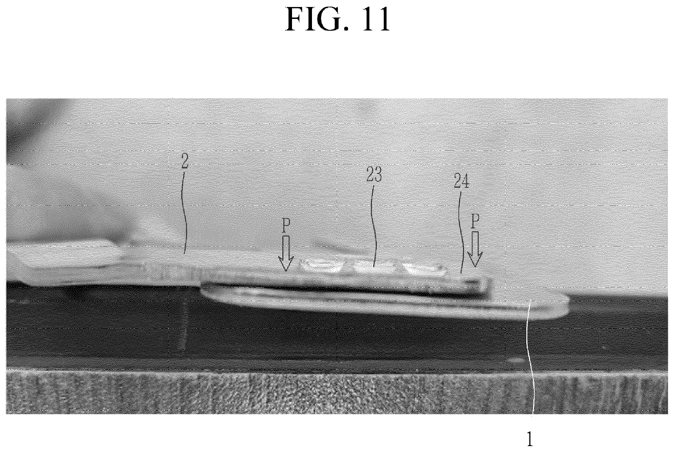

FIG. 10 shows an image in a plan view if flexible busbar members are welded by using an ultrasonic welding device according to an embodiment, and FIG. 11 shows an image in a lateral view if flexible busbar members are welded by using an ultrasonic welding device according to an embodiment.

Referring to FIG. 10 and FIG. 11, as the first member 1 and the second member 2 are ultrasonically welded by using the guide jig 50 according to an embodiment, the external plane 24 around the welding portion 23 is pressurized (P) by the external portion 511 and is maintained as fixed, the lifting and cracks described with reference to the comparative examples 1 and 2 are not generated.

In detail, the external plane 24 around the welding portion 23 may be pressurized (P) by the plane corresponding portion 52, and a movement of the external lateral side 25 of the welding portion 23 may be restricted by the lateral corresponding portion 53. Therefore, the lifting and cracks around the welding portion 23 to which the first member 1 and the second member 2 are ultrasonically welded may be further prevented.

For this purpose, the first and second members 1 and 2 may be made of an aluminium material. For example, the horn 40 may be made of very hard tungsten (WC) or a tungsten carbide material with strength and stiffness that are greater than those of the first and second members 1 and 2. The guide jig 50 may be made of very hard tungsten (WC) or a tungsten carbide material with strength and stiffness that are greater than those of the first and second members 1 and 2.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

The present invention may also be defined by reference to the following clauses:
Clause 1. An ultrasonic welding device comprising:
   an anvil for supporting a flexible first member from among the first member and a flexible second member overlapping in a top to bottom direction and sequentially disposed from bottom to top;
   a horn for ultrasonically welding the first member and the second member by elevation and ultrasonic vibration in an upper direction of the second member; and
   a guide jig for penetrating corresponding to a welding portion of the first member and the second member, opening the welding portion with an opening for guiding elevation and ultrasonic vibration of the horn, and covering an external plane of the welding portion with a plane corresponding portion so as to ultrasonically weld the first member and the second member.
Clause 2. The ultrasonic welding device of clause 1, wherein
   the plane corresponding portion is formed as a same plane in four directions from among respective sides of the length direction and respective sides of the width direction of the first member and the second member on the external plane of the welding portion.
Clause 3. The ultrasonic welding device of clause 1 or clause 2, wherein
   the guide jig further holds an external lateral side of the welding portion with a lateral corresponding portion.
Clause 4. The ultrasonic welding device of clause 3, wherein
   the lateral corresponding portion protrudes downward from the plane corresponding portion in the three directions of one side of the length direction and the respective sides of the width direction from among the respective sides of the length direction and the respective sides of the width direction of the first member and the second member on the external plane of the welding portion.
Clause 5. The ultrasonic welding device of any one of clauses 1 to 4, wherein
   the guide jig comprises,
   a guide portion including the opening and the plane corresponding portion, and
   an installer connected to one side of the guide and installed in a base.
Clause 6. The ultrasonic welding device of clause 5, wherein
   the guide portion has the opening in a center and an external portion outside the opening, and
   a first width of the opening in a width direction is greater than a second width of the external portion in the width direction with respect to a length direction and a width direction of the first member and the second member.
Clause 7. The ultrasonic welding device of clause 6, wherein
   a first length of the opening in a length direction is greater than a second length of the external portion in a length direction on one side of the length direction.
Clause 8. The ultrasonic welding device of clause 7, wherein
   the second length is greater than the second width.
Clause 9. The ultrasonic welding device of any one of clauses 1 to 8, wherein
   the first member comprises,
   a first busbar including branches connected to battery cells provided to a secondary battery module, and
   a second busbar including branches spaced by a gap from the first busbar in a length direction and connected to other battery cells, and
   the second member connects the first busbar and the second busbar by ultrasonic welding.
Clause 10. The ultrasonic welding device of clause 9, wherein
   the first busbar further comprises a first connector on one side of a width direction,
   the second busbar is spaced from the first connector by the gap and further comprises a second connector on one side of the width direction, and
   the second member is connected to the first connector and the second connector by ultrasonic welding.
Clause 11. The ultrasonic welding device of clause 9 or clause 10, wherein
   the first member and the second member are made of aluminium.
Clause 12. The ultrasonic welding device of any one of clauses 1 to 10, wherein
   the first member and the second member are made of an aluminium material, and
   the horn is made of a very hard tungsten (WC) or a tungsten carbide material with strength and stiffness that are greater than those of the first member and the second member.
Clause 13. The ultrasonic welding device of any one of clauses 1 to 10, wherein
   the first member and the second member are made of an aluminium material, and
   the guide jig is made of very hard tungsten (WC) or a tungsten carbide material with strength and stiffness that are greater than those of the first member and the second member.

**<Description of symbols>**

| | | | |
|---|---|---|---|
| 1: | first member | 2: | second member |
| 11: | first busbar | 12: | second busbar |
| 23: | welding portion | 24: | external plane |
| 25: | external lateral side | 30: | anvil |
| 31: | external support portion | | |
| 40: | horn | 41: | converter |
| 42: | booster | 50: | guide jig |
| 51: | opening | 52: | plane corresponding portion |
| 53: | lateral corresponding portion | 60: | base |
| 111: | branch | 112: | first connector |
| 121: | branch | 122: | second connector |
| 501: | guide portion | 502: | installer |
| 511: | external portion | | |
| C8, C9: | crack | G: | gap |
| L1: | first length | L2: | second length |
| L8, L9: | lifting | W1: | first width |
| W2: | second width | | |

## Claims

1. An ultrasonic welding device comprising:
an anvil for supporting a first member and a second member overlapping in a top to bottom direction and sequentially disposed from bottom to top;
a horn for ultrasonically welding the first member and the second member by elevation and ultrasonic vibration at an upper portion of the second member; and
a guide jig comprising an opening corresponding to a welding portion of the first member and the second member for guiding elevation and ultrasonic vibration of the horn, and covering an external plane around the welding portion with a plane corresponding portion so as to ultrasonically weld the first member and the second member.

2. The ultrasonic welding device of claim 1, wherein
the plane corresponding portion is formed as a same plane in four directions from among two sides of a length direction and two sides of a width direction of the first member and the second member on the external plane around the welding portion.

3. The ultrasonic welding device of claim 1 or claim 2, wherein
the guide jig is further configured to hold an external lateral side of the welding portion with a lateral corresponding portion.

4. The ultrasonic welding device of claim 3, wherein
the lateral corresponding portion protrudes downward from the plane corresponding portion in three directions of one side of a length direction and two sides of a width direction from among the two sides of the length direction and two sides of the width direction of the first member and the second member on the external plane around the welding portion.

5. The ultrasonic welding device of any one of claims 1 to 4, wherein the guide jig comprises,
a guide portion including the opening and the plane corresponding portion, and
an installer connected to one side of the guide portion and installed in a base.

6. The ultrasonic welding device of claim 5, wherein
the guide portion has the opening in a center and an external portion outside the opening, and
with respect to a length direction and a width direction of the first member and the second member, a first width of the opening in the width direction is greater than a second width of the external portion in the width direction.

7. The ultrasonic welding device of claim 6, wherein
a first length of the opening in the length direction is greater than a second length of the external portion in the length direction on one side of the length direction.

8. The ultrasonic welding device of claim 7, wherein
the second length is greater than the second width.

9. The ultrasonic welding device of any one of claims 1 to 8, wherein the first member comprises,
a first busbar including branches configured to be connected to battery cells provided in a secondary battery module, and
a second busbar spaced by a gap from the first busbar in a length direction and including branches configured to be connected to other battery cells, and
the second member connects the first busbar and the second busbar by ultrasonic welding.

10. The ultrasonic welding device of claim 9, wherein
the first busbar further comprises a first connector on one side of a width direction,
the second busbar further comprises a second connector on one side of the width direction, and
the second member is connected to the first connector and the second connector by ultrasonic welding.

11. The ultrasonic welding device of claim 9 or claim 10, wherein
the first member and the second member are made of aluminium.

12. The ultrasonic welding device of any one of claims 1 to 10, wherein
the first member and the second member are made of an aluminium material, and
the horn is made of a tungsten carbide material with strength and stiffness that are greater than those of the first member and the second member.

13. The ultrasonic welding device of any one of claims 1 to 10, wherein
the first member and the second member are made of an aluminium material, and
the guide jig is made of a tungsten carbide material with strength and stiffness that are greater than those of the first member and the second member.
